# EUROPÄISCHE PATENTSCHRIFT

(11) **EP 0 850 502 B1**
(45) Veröffentlichungstag und Bekanntmachung des Hinweises auf die Patenterteilung: **12.05.1999**
(21) Anmeldenummer: 96931028.3
(22) Anmeldetag: 05.09.1996
(51) Int. Cl.: H02H 3/08, H02H 7/085

(54) **SCHALTUNGSANORDNUNG ZUR ERKENNUNG EINER ÜBERTEMPERATUR AUFGRUND EINES FLIESSENDEN STROMES**
CIRCUIT CONFIGURATION TO DETECT EXCESS TEMPERATURE DUE TO CURRENT FLOW
CIRCUIT POUR DETECTER UNE ELEVATION DE TEMPERATURE DUE AU PASSAGE D'UN COURANT

(30) Priorität: 14.09.1995 DE 19534056
(43) Veröffentlichungstag der Anmeldung: 01.07.1998
(73) Patentinhaber: Braun Aktiengesellschaft, Frankfurt am Main (DE)
(72) Erfinder: BAUER, Alfred, D-63263 Neu-Isenburg (DE)
(86) Internationale Anmeldenummer: EP9603902
(87) Internationale Veröffentlichungsnummer: WO9710634

(56) Entgegenhaltungen:
- DE-A- 4 014 629

## Beschreibung

Die vorliegende Erfindung betrifft eine Schaltungsanordnung zur Erkennung einer Übertemperatur aufgrund eines fließenden Stromes nach dem Oberbegriff des Patentanspruchs 1.

Aus der DE 40 14 629 A1 ist ein Motorschutz- oder Überstromrelais bekannt, bei dem ein in der Nähe eines vom Motorstrom durchflossenen Heizwiderstands ein temperaturabhängiger Widerstand vorgesehen ist, der sich zusammen mit einem Schaltorgan in einem vom Motorstromkreis getrennten Schaltkreis befindet, derart, daß im Falle eines einen Grenzwert überschreitenden Überstroms das Schaltorgan die Stromzufuhr zum Motor unterbricht. Vorzugsweise ist der temperaturabhängige Widerstand dort auf der einen Seite einer Leiterplatte angeordnet, wo auf der anderen Seite der Leiterplatte sich der Heizwiderstand befindet, sodaß die beiden Widerstände thermisch gekoppelt sind.

In einer bereits bekannten Küchenmaschine, die unter der Bezeichnung K1000 von der Anmelderin am Markt vertrieben wird, wird zur Erkennung einer Übertemperatur ein quaderförmiger Körper aus Aluminiumoxyd vorgesehen, der auf seiner einen großen Seitenfläche einen mit Silberleitpaste gedruckten niederohmigen Widerstand Rs aufweist. In unmittelbarer Nähe davon befindet sich ebenfalls auf dem Körper aus Aluminiumoxyd ein gedruckter Widerstand Rn, der eine NTC-Charakteristik (negativer Temperatur-Koeffizient) aufweist. Diese beiden Widerstände sind in die elektronische Schaltung für die Drehzahleinstellung eingebunden. Der Motorstrom fließt über den Widerstand Rs. Dadurch bedingt erwärmt sich der Widerstand Rs und deswegen auch der Aluminiumoxydkörper. Die Temperatur des Aluminiumoxydkörpers ändert sich dabei und infolge davon auch die Temperatur des NTC-Widerstandes Rn. Wegen dessen NTC-Charakteristik ändert sich dabei dessen Widerstandswert. Mittels einer Komparatorschaltung wird dabei der Wert des NTC-Widerstandes überwacht. Bei einer Unterschreitung eines bestimmten Widerstandswertes wird der Drehzahlsteller und damit die Stromversorgung des Elektromotors abgeschaltet. Dabei ist eine gute Wärmeleitung zwischen den Widerständen und dem Aluminiumoxydkörper nötig. Außer dem Schwellwert des NTC-Widerstandes, bei dem eine Abschaltung erfolgt, sind dabei weitere wesentliche Größen die Abmessungen des Aluminiumoxydkörpers, die zum einen dessen Wärmekapazität bestimmen und zum anderen über die damit zusammenhängende Oberfläche des Körpers dessen Wärmeabstrahlung beeinflussen. Durch die Wahl eines Aluminiumoxydkörpers geeigneter Größe und geometrischer Form sowie die Einstellung eines passenden Schwellwertes des NTC-Widerstandes läßt sich damit eine Übertemperaturabschaltung realisieren.

Demgegenüber zeigt sich bei dem Gegenstand der vorliegenden Erfindung, daß es mit wesentlich einfacheren Mitteln möglich ist, eine Übertemperatur zu erkennen. Die dazu benötigten Bauteile müssen nicht gesondert für die spezielle Anwendung gefertigt werden. Es können vielmehr Bauelemente verwendet werden, die als standardisiertes Massenprodukt kostengünstig hergestellt werden. Die für die Wärmeübertragung benötigten Kontaktflächen auf der Leiterplatte können dabei ebenfalls unmittelbar bei der Erstellung der für die elektrische Kontaktierung benötigten Kontaktflächen auf der Leiterplatte erstellt werden. Die erfindungsgemäße Schaltungsanordnung kann dann also vorteilhaft und sehr kostengünstig in einem Arbeitsgang mit der Bestückung und Kontaktierung der Leiterplatte mit hergestellt werden. Da also kein besonderes Handling erforderlich ist, um die erfindungsgemäße Schaltungsanordnung herzustellen und auf die Leiterplatte aufzubringen und sich die Wärmeankopplung mit Standardbauteilen realisieren läßt, ist also insbesondere bei einer Fertigung in großen Stückzahlen eine Vereinfachung der Herstellung und damit eine erhebliche Einsparung von Kosten verbunden.

Die der Erfindung zugrundeliegende Idee besteht darin, daß SMD-Widerstände an den Stellen, an denen sie mit der Leiterbahn einer Leiterplatte verlötet sind, nicht nur einen guten elektrischen sondern gleichzeitig auch einen guten thermischen Kontakt zur Leiterbahn aufweisen. Da die üblicherweise verwendeten Leiterbahnen aus Kupfer nicht nur gute elektrische sondern auch gute thermische Leiter sind, kann erfindungsgemäß die Leiterbahn als Element zur thermischen Kopplung des eingangs erwähnten niederohmigen Widerstands Rs und des NTC-Widerstands Rn dienen.

Die Schaltungsanordnung nach Anspruch 1 beschreibt die erfindungsgemäße Anordnung von Standardbauteilen und deren Anbringung, die im Rahmen eines üblichen Herstellungsverfahrens einer Leiterplatte möglich ist.

Die SMD-Widerstände bestehen dabei aus einem Grundkörper aus Aluminiumoxyd. Dieser Grundkörper ist mit einer niederohmigen Paste bedruckt. Bei der Anbringung des SMD-Widerstandes auf der Leiterplatte ergibt sich zum einen eine elektrische Kontaktierung mit der Kontaktfläche auf der Leiterplatte über die elektrisch leitende Verbindung an dem jeweiligen Ende des SMD-Widerstandes. Diese elektrische Kontaktierung über den verkupferten Anschluß des SMD-Widerstandes, der dann noch mittels Lot auf der Kontaktfläche angeschlossen wird, weist dabei neben der elektrischen Kontaktierung noch eine Wärmeleitbrücke mit einer sehr guten Wärmeleitfähigkeit auf. Zum anderen besteht auch eine wärmeleitende Verbindung zwischen dem SMD-Widerstand und der Kontaktfläche auf der Leiterplatte durch das Aufliegen des SMD-Widerstandes auf der Kontaktfläche auch mit einem Teil, der nicht elektrisch kontaktierend wirkt. Dieser Teil des SMD-Widerstandes wird dabei mittels eines Klebers auf der Leiterplatte aufgebracht. Dadurch wird der SMD-Widerstand bei der Bestückung in seiner Lage fixiert. Die Wärmeleitfähigkeit dieses Überganges von der Kontaktfläche der Leiterplatte zu dem SMD-Bauteil hängt dabei wesentlich von der thermischen Leitfähigkeit des SMD-Klebers ab, mit dem der SMD-Widerstand auf der Leiterplatte aufgeklebt wird. Zur Erhöhung der Wärmeleitfähigkeit kann gegebenenfalls ein SMD-Kleber mit Zusätzen verwendet werden, die eine besonders gute thermische Leitfähigkeit des SMD-Klebers bewirken. Das Aluminiumoxyd des SMD-Widerstandes erlaubt einen Wärmetransport von dem SMD-Bauelement auf die Kontaktfläche oder auch umgekehrt. Bei der vorliegenden Erfindung wird die Wärmeankopplung zwischen der ersten und der zweiten Widerstandsanordnung dadurch vorgenommen, daß die SMD-Bauelemente selbst aufgrund ihrer geometrischen Abmessungen und ihres Materiales eine gewisse Wärmekapazität aufweisen und aufgrund ihrer Oberflächen eine gewisse Wärmeabstrahlung ermöglichen. Ebenso weisen die Kontaktflächen auf der Leiterplatte eine gewisse Wärmekapazität auf und ermöglichen aufgrund ihrer Oberfläche eine gewisse Wärmeabstrahlung. Anhand dieser Größen läßt sich dann gegebenfalls experimentell ein Schwellwert des Widerstandes für die zweite Widerstandsanordnung finden, ab dem auf eine Übertemperatur erkannt wird. Die bei der erfindungsgemäßen Schaltungsanordnung beteiligten Wärmekapazitäten sorgen nicht nur beim Temperaturanstieg für eine Simulation des Temperaturverhaltens der Gesamtanordnung sondern auch während der Abkühlung nach einem Abschalten des Stromes. Die Gesamtanordnung kühlt sich dann nur mit der Zeit ab. Ebenso verhält sich die erfindungsgemäße Schaltungsanordnung.

Mit der Ausgestaltung der Schaltungsanordnung nach Anspruch 2 ist es möglich, eine gewisse resultierende Wärmekapazität zu erhalten durch die Aufsummierung der Wärmekapazitäten der einzelnen Widerstände. Außerdem läßt sich durch die Parallelschaltung der Widerstände ein gewünschter einzustellender niedriger Widerstandswert der ersten Widerstandsanordnung erzielen. Vorteilhaft wirkt sich dabei aus, daß Standardbauteile verwendet werden können und keine anwendungsspezifische Anfertigung von Widerständen vorgenommen werden muß.

Die Schaltungsanordnung nach Anspruch 3 besteht aus preisgünstig zu erhaltenden Bauteilen.

Die Schaltungsanordnung nach Anspruch 4 weist den Vorteil auf, daß die zweite Widerstandsanordnung in einem separaten Schaltkreis liegt, so daß die Auswertung dieses Widerstandswertes unabhängig von dem fließenden Laststrom erfolgen kann. Diese Auswertung kann auch dann in einem separaten Schaltkreis erfolgen, wenn einer der beiden elektrischen Anschlüsse der zweiten Widerstandsanordnung auf demselben elektrischen Potential mit einem der elektrischen Anschlüsse der ersten Widerstandsanordnung liegt. In diesem Fall befindet sich in jedem der Schaltkreise eine Spannungsquelle, wobei die Leistung der Spannungsquelle in dem Schaltkreis, der lediglich der Auswertung des Widerstandswertes der zweiten Widerstandsanordnung dient, wesentlich geringer sein kann.

Die Ansprüche 5 bis 9 beanspruchen verschiedene Ausführungsformen der Schaltungsanordnung.

Mit der Schaltungsanordnung nach Anspruch 6 wird ein optmierter Wärmeübergang durch die Einbeziehung zweier Kontaktflächen auf der Leiterplatte erreicht. Gleichzeitig wird bei dieser Anordnung Platz auf der Leiterplatte gespart.

Durch die Ausgestaltung der Schaltungsanordnung nach Anspruch 7 wird erreicht, daß sich die in den Widerständen der ersten Widerstandsanordnung entstehende Wärme gleichmäßig auf die beiden Kontaktflächen verteilt. Dadurch ist eine optimierte Übertragung der Wärme auf die zweite Widerstandsanordnung gegeben.

Mit der Ausgestaltung der Schaltungsanordnung nach Anspruch 8 wird erreicht, daß ein gleichmäßiger Wärmeübergang von den beiden Kontaktflächen auf die zweite Widerstandsanordnung gewährleistet ist.

Mit der Schaltungsanordnung nach Anspruch 9 wird es ebenfalls möglich, eine Reihenschaltung der beiden Widerstandsanordnungen zu realisieren, bei der außerdem ein optimierter Wärmeübergang durch die Einbeziehung zweier Kontaktflächen auf der Leiterplatte besteht. Gleichzeitig wird bei dieser Anordnung ebenfalls Platz auf der Leiterplatte gespart.

Ausführungsbeispiele der Erfindung sind in den Zeichnungen dargestellt. Es zeigen dabei:
- Fig. 1 bis 5:: verschiedene Ausführungsformen der Schaltungsanordnung und
- Fig. 6:: ein Ausführungsbeispiel der Verwendung der Schaltungsanordnung.

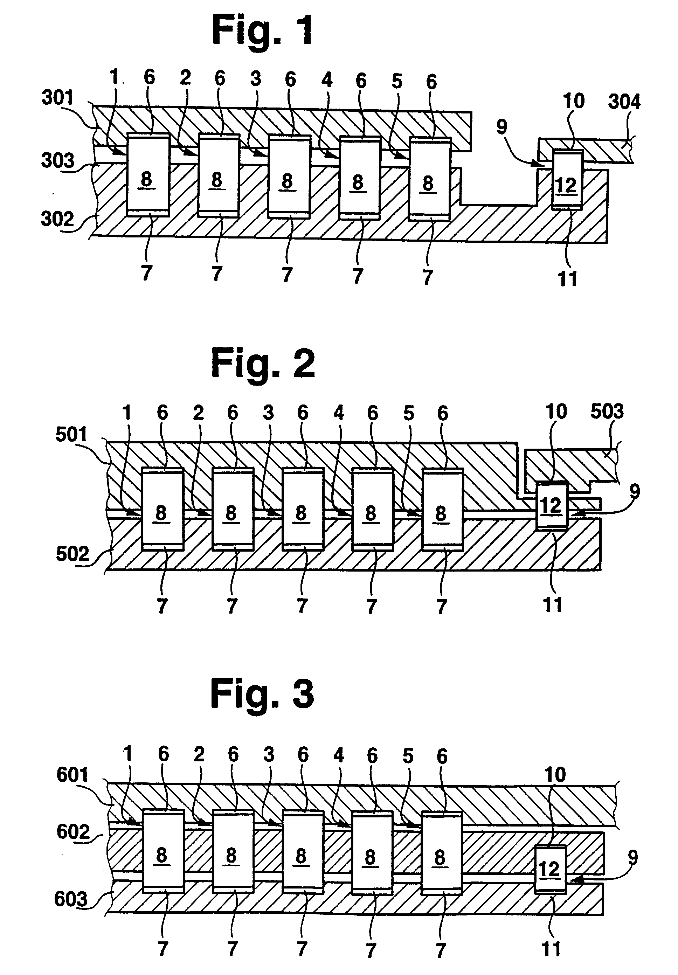

Fig. 1 zeigt eine erste Schaltungsanordnung bei der als SMD-Bauteile ausgebildete Widerstände 1, 2, 3, 4, 5 einer ersten Widerstandsanordnung mit den Teilen 6 bzw. 7 ihrer jeweiligen Auflagefläche, durch die eine elektrische Kontaktierung möglich ist, auf jeweils einer Kontaktfläche 301 bzw. 302 aufliegen. In dem Ausführungsbeispiel der Fig. 1 sind die die erste Widerstandsanordnung bildenden Widerstände 1, 2, 3, 4 und 5 parallel geschaltet. Diese Widerstände weisen als Grundbestandteil einen Körper aus Aluminiumoxyd auf, auf den der Widerstand mit einer Leitpaste aufgedruckt ist. Über die Teile 6 und 7 der Widerstände 1, 2, 3, 4 und 5 wird dieser aufgedruckte Widerstand dann elektrisch kontaktiert. Der Körper aus Aluminiumoxyd ist elektrisch nicht leitend, wohl aber wärmeleitend. Ein Teil 8 der Auflagefläche, durch den keine elektrische Kontaktierung der Widerstände 1, 2, 3, 4 oder 5 mit einer darunter liegenden Kontaktfläche möglich ist, liegt überwiegend auf der Kontaktfläche 302 auf. Dadurch ist eine thermische Ankopplung der als SMD-Bauteile ausgebildeten Widerstände 1, 2, 3, 4 und 5 mit der Kontaktfläche 302 gegeben.

Wie Fig. 1 weiter zu entnehmen ist, wird eine zweite Widerstandsanordnung durch den ebenfalls als SMD-Bauteil ausgebildeten Widerstand 9 gebildet. Die Teile 10 und 11 der Auflagefläche des Widerstandes 9 sind dabei jeweils mit einer Kontaktfläche 304 bzw. der Kontaktfläche 302 kontaktiert.

Der Teil 12 der Auflagefläche des Widerstandes 9, durch den keine elektrische Kontaktierung des Widerstandes 9 mit einer darunter liegenden Kontaktfläche möglich ist, liegt überwiegend auf der Kontaktfläche 302 auf. Dadurch ist eine thermische Ankopplung des als SMD-Bauteil ausgebildeten Widerstandes 9 mit der Kontaktfläche 302 gegeben, genau so wie dies im Zusammenhang mit den Widerständen 1, 2, 3, 4 und 5 beschrieben ist.

Die erste Widerstandsanordnung wird mit dem Strom beaufschlagt, aufgrund dessen eventuell eine Übertemperatur auftreten kann. Der Strom bewirkt dabei eine Erwärmung. Diese Erwärmung hängt dabei ab von der Größe des Stromes, der Zeitdauer, während der der Strom fließt, der pro Zeiteinheit wiederum abgegebenen Wärmemenge sowie der Wärmekapazität. Die von dem Strom erzeugte Wärmemenge ist dabei proportional dem zeitlichen Integral des Quadrates des Stromes. Die Erwärmung, d.h. die Temperatur, soll auf das Erreichen eines bestimmten Grenzwertes hin kontrolliert werden soll. Dazu wird diese erste Widerstandsanordnung über die Kontaktflächen 301, 302 den Bauteilen elektrisch in Reihe geschaltet, die diesen Strom führen. Durch den Stromfluß erwärmen sich mit der Zeit die Widerstände 1, 2, 3, 4 und 5 entsprechend der Wärmekapazität der Aluminiumoxydkörper der SMD-Bauteile, der Wärmekapazität der Kontaktflächen sowie der Wärmekapazität des Alumniumoxydkörpers des Widerstandes 9, der Wärmeleitung von den Widerständen 1, 2, 3, 4 und 5 zum Widerstand 9 sowie der abgegebenen Wärmemenge über die Oberflächen. Durch die resultierende Erwärmung des Widerstandes 9 ändert sich der Widerstandswert der zweiten Widerstandsanordnung, die das Verhalten eines Thermistors aufweist, beispielsweise eines NTC-Widerstandes. Durch den Anschluß der Kontaktflächen 304, 302 an eine Komparator- und Auswerteschaltung, mit der diese temperaturbedingte Widerstandsänderung erfaßt wird, kann daraus das Auftreten einer Übertemperatur, d.h. das Erreichen bzw. das Überschreiten eines Grenzwertes der Temperatur erkannt werden.

Bei dieser Schaltungsanordnung liegen die elektrisch leitenden Teile 8, 12 der Auflagefläche der SMD-Widerstände 1, 2, 3, 4, 5 und 9 auf derselben Kontaktfläche 302 auf. Diese Kontaktfläche 302 dient hinsichtlich der ersten und der zweiten Widerstandsanordnung der thermischen Kopplung.

Die zweite Widerstandsanordnung kann ebenfalls aus mehreren Widerständen aufgebaut sein.

Fig. 2 zeigt eine weitere Schaltungsanordnung, bei der gleiche Bezugszeichen die gleiche Bedeutung haben wie bei Fig. 1, so daß diese nicht mehr gesondert erörtert werden müssen.

Abweichend von der Schaltungsanordnung nach Fig. 1 ist bei der Schaltungsanordnung nach Fig. 2 die zweite Widerstandsanordnung, bestehend aus dem Widerstand 9, über die Kontaktfläche 501 thermisch mit der ersten Widerstandsanordnung gekoppelt. Wie Fig. 2 zu entnehmen ist, wird die zweite Widerstandsanordnung mit dem Teil 11 der Auflagefläche des Widerstandes 9 über die Kontaktfläche 502 elektrisch kontaktiert. Fig. 2 ist weiterhin zu entnehmen, daß die Kontaktfläche 501 in dem Bereich, in dem der Widerstand 9 aufgelegt wird, so ausgebildet ist, daß ein vergleichsweise großer Teil des Teiles 12 des Widerstandes 9 der zweiten Widerstandsanordnung, über den keine elektrische Kontaktierung möglich ist sondern lediglich eine thermische Ankopplung, auf der Kontaktfläche 501 zum Aufliegen kommt. Dadurch ist eine besonders gute thermische Ankopplung des Widerstandes 9 an die Kontaktfläche 501 gegeben.

Bei der Schaltungsanordnung nach Fig. 2 werden die Kontaktflächen 502, 503 an eine Komparator- und Auswerteschaltung angeschlossen, mit der die temperaturbedingte Widerstandsänderung erfaßt wird. Daraus kann das Auftreten einer Übertemperatur, d.h. das Erreichen bzw. das Überschreiten eines Grenzwertes der Temperatur erkannt werden.

Fig. 3 zeigt eine weitere Schaltungsanordnung, bei der gleiche Bezugszeichen die gleiche Bedeutung haben wie bei Fig. 1, so daß diese nicht mehr gesondert erörtert werden müssen.

Bei der Schaltungsanordnung nach Fig. 3 werden die Kontaktflächen 602, 603 an eine Komparator- und Auswerteschaltung angeschlossen, mit der die temperaturbedingte Widerstandsänderung erfaßt wird. Daraus kann das Auftreten einer Übertemperatur, d.h. das Erreichen bzw. das Überschreiten eines Grenzwertes der Temperatur erkannt werden.

Die Schaltungsanordnung nach Fig. 3 ist gegenüber der Schaltungsanordnung nach Fig. 1 dahingehend abgeändert, daß die Teile 8 der Auflagefläche, durch den keine elektrische Kontaktierung der Widerstände 1, 2, 3, 4 oder 5 mit einer darunter liegenden Kontaktfläche möglich ist, auf der Kontaktfläche 602 aufliegen, die der Kontaktfläche 304 der Fig. 1 entspricht. Dadurch ist eine thermische Ankopplung der als SMD-Bauteile ausgebildeten Widerstände 1, 2, 3, 4 und 5 mit dem Widerstand 9 der zweiten Widerstandsanordnung über die Kontaktfläche 602 gegeben.

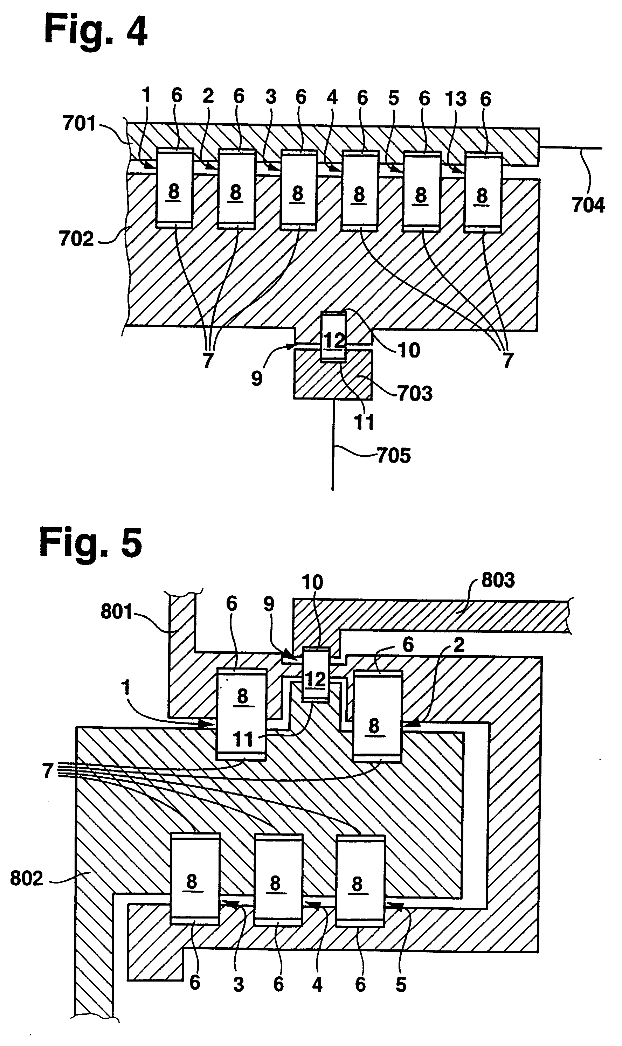

Die Schaltungsanordnung nach Fig. 4 zeigt zum einen, daß die erste Widerstandsanordnung nicht nur aus fünf sondern auch aus einer anderen Zahl von Widerständen 1, 2, 3, 4, 5, 13, beispielsweise sechs, bestehen kann. Ebenso kann die zweite Widerstandsanordnung auch aus einer Mehrzahl von Widerständen bestehen, was aber in der Zeichnung nicht dargestellt ist. Die erste Widerstandsanordnung und die zweite Widerstandsanordnung sind über die Kontaktflächen 701, 702, 703 in Reihe geschaltet und weiter über die gezeigten Anschlüsse 704 und 705 kontaktiert. Dadurch ergibt sich eine einfache Möglichkeit, die Widerstände anzuschließen. Es ist dabei möglich, den Anschluß 705 und die Kontaktfläche 702 direkt mit der Auswerteschaltung zu kontaktieren, um so das Signal besser auswerten zu können.

Fig. 5 zeigt eine weitere, besonders bevorzugte Ausführungsform der Schaltungsanordnung. Die als SMD-Bauteile ausgebildete Widerstände 1, 2, 3, 4, 5 einer ersten Widerstandsanordnung liegen mit den Teilen 6 bzw. 7 ihrer jeweiligen Auflagefläche, durch die eine elektrische Kontaktierung möglich ist, auf jeweils einer Kontaktfläche 801 bzw. 802 auf. In dem Ausführungsbeispiel der Fig. 5 sind die die erste Widerstandsanordnung bildenden Widerstände 1, 2, 3, 4 und 5 parallel geschaltet. Der Teil 12 der Auflagefläche des Widerstandes 9 der zweiten Widerstandsanordnung, über den lediglich ein thermischer aber kein elektrischer Kontkat herstellbar ist, liegt dabei zum einen - zusammen mit der elektrischen Kontaktierung 11 auf der Kontaktfläche 802 auf und zum anderen ohne eine elektrischen Verbindung herzustellen auf der Kontaktfläche 801. Dadurch werden vorteilhaft beide Kontaktflächen 801 und 802 zur thermischen Ankopplung ausgenutzt. Ein Teil 8, durch den keine elektrische Kontaktierung der Widerstände 1, 2, 3, 4 oder 5 mit einer darunter liegenden Kontaktfläche möglich ist, liegt dabei auf einer der Kontaktflächen 801 und 802 auf. Dadurch ist eine thermische Ankopplung der als SMD-Bauteile ausgebildeten Widerstände 1, 2, 3, 4 und 5 sowohl mit der Kontaktfläche 801 als auch mit der Kontaktfläche 802 gegeben.

Vorteilhaft erweist es sich bei der Ausführungsform nach Fig. 5, wenn die Widerstände 1, 2, 3, 4 und 5 der ersten Widerstandsanordnung in zwei Gruppen, bestehend zum einen aus den Widerständen 1 und 2 sowie zum anderen aus den Widerständen 3, 4 und 5 geteilt werden. Wie Fig. 5 zu entnehmen, liegen die Widerstände 1 und 2 der ersten Gruppe mit einem größeren Teil des Teiles 8 der Auflagefläche, über den keine elektrische Kontaktierung möglich ist, auf der Kontaktfläche 801 auf. Die Widerstände 3, 4 und 5 der zweiten Gruppe liegen mit einem größeren Teil des Teiles 8 der Auflagefläche, über den keine elektrische Kontaktierung möglich ist, auf der Kontaktfläche 802 auf. Dadurch geben die Widerstände 1 und 2 der ersten Gruppe die Wärme vorwiegend an die Kontaktfläche 801 ab, während die Widerstände 3, 4 und 5 der zweiten Gruppe die Wärme vorwiegend an die Kontaktfläche 802 abgeben. Dadurch wird die Wärmekapazität und die Wärmeleitfähigkeit der Kontaktflächen 801 und 802 besonders gut genutzt.

Um einen besonders guten Wärmeübergang auf den Widerstand 9 zu ermöglichen, liegt dieser mit seinem Teil 12, über den keine elektrische Kontaktierung möglich ist, zu etwa gleichen Teilen auf der Kontaktfläche 801 und 802 auf.

Die beschriebene Erfindung eignet sich besonders zur Temperaturüberwachung eines Elektromotors, insbesondere eines Antriebsmotors einer Haushaltsküchenmaschine. Durch die dabei auftretenden großen Stückzahlen lassen sich durch die Verwendung vergleichsweiser kostengünstiger Standardbauteile in der Summe große Einsparungen erzielen.

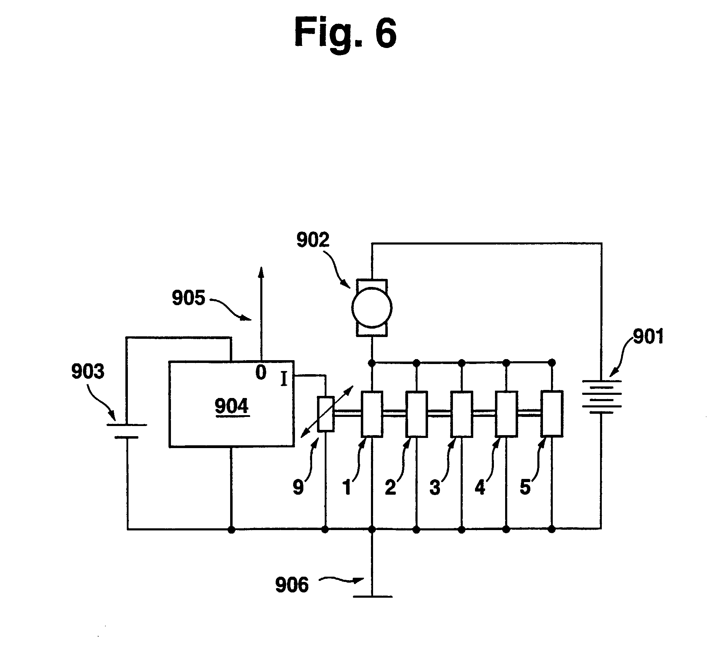

Fig. 6 zeigt eine Schaltung, in der die erfindungsgemäße Schaltungsanordnung eingebaut ist. Die erste Widestandsanordnung besteht hier aus den SMD-Widerständen 1, 2, 3, 4 und 5. Diese SMD-Widerstände sind dabei mit einem Elektromotor 902 in Reihe geschaltet, so daß durch die SMD-Widerstände derselbe Strom fließt wie durch den Elektromotor. Jeder der SMD-Widerstände 1, 2, 3, 4 und 5 weist dabei einen Widerstand von 1 Ohm auf, so daß sich für die erste Widerstandsanordnung ein Ersatzwiderstand von 0,2 Ohm ergibt. Dieser Schaltkreis, bestehend aus der ersten Widerstandsanordnung und dem Elektromotor 902 wird dabei von einer Spannungsquelle 901 versorgt. Mit dieser ersten Widerstandsanordnung ist eine zweite Widerstandsanordnung, bestehend aus dem SMD-Widerstand 9 thermisch gekoppelt. Dieser Widerstand 9 weist dabei ein NTC-Verhalten auf und hat bei Zimmertemperatur einen Widerstandswert von ca. 10 kOhm. Mit einer zunehmenden Erwärmung sinkt dieser Widerstandswert. Mit dieser zweiten Widerstandsanordnung ist in einem Schaltkreis eine Auswerteeinheit 904 angeordnet. Weiterhin ist in diesem Schaltkreis eine zweite Spannungsquelle 903 vorhanden, die beispielsweise eine Spannung von 15V liefert. Aufgrund eines großen Stromes in dem ersten Stromkreis erwärmt sich also die erste Widerstandsanordnung und wegen der thermischen Kopplung auch die zweite Widerstandsanordnung. Die Änderung des Widerstandswertes der zweiten Widerstandsanordnung wird dann auf das Unterschreiten eines bestimmten Schwellwertes überwacht. Wird dies von der Auswerteeinheit 904 erkannt, gibt diese ein Ausgangssignal 905 aus. Durch dieses Ausgangssignal 905 kann beispielsweise mittels eines (hier nicht dargestellten) Relais in dem ersten Stromkreis der Motorstrom abgeschaltet werden. Nach der Abschaltung des Motorstromes erfolgt auch hinsichtlich der ersten Widerstandsanordnung nur eine allmähliche Abkühlung aufgrund der Wärmekapazität der Aluminiumoxyd-Bestandteile des SMD-Widerstände 1, 2, 3, 4, 5 und 9. Dadurch werden in dem hier beschriebenen Ausführungsbeispiel aber gerade die realen Verhältnisse simuliert, da sich der Motor auch nur langsam abkühlt.

Wie dargestellt, sind die erste und die zweite Widerstandsanordnung an einer Kontaktstelle elektrisch miteinander in Kontakt. Dadurch ist über diese elektrische Kontaktierung auch eine besonders gute Wärmeleitung zwischen der ersten und der zweiten Widerstandsanordnung gegeben. Außerdem wird dadurch Platz auf der Leiterplatte gespart.

Es ist ebenso möglich, die erste Widerstandsanordnung so zu positionieren, daß sie von einem Strom durchflossen wird, der den Motorstrom lediglich repäsentiert.

Wird der Motor beispielsweise mittels einer Pulsweitenmodulierung gesteuert oder geregelt, so wird dem Motor eine Freilaufdiode parallel geschaltet, was hier nicht dargestellt ist. Wird dabei von der Pulsweitenmodulierung der Motor von der Spannungsquelle getrennt, so fließt in diesem Moment kein Strom von der Spannungsquelle zu dem Motor. Aufgrund der Lenz'schen Regel fließt dann aber in dem Stromkreis bestehend aus dem Motor und der Freilaufdiode ein Strom.

Die erste Widerstandsanordnung kann dann so positioniert sein, daß sie nicht in dem Stromkreis, bestehend aus der Freilaufdiode und dem Motor angeordnet ist. Die erste Widerstandsanordnung wird dann nur von dem Strom durchflossen, der von der Spannungsquelle zum Motor fließt, wenn der Motor durch die Pulsweitenmodulierung mit der Spannungsquelle verbunden ist.

Dieser Strom steht aber in einem Zusammenhang mit dem Strom, der durch den Motor fließt, so daß die erste Widerstandsanordnung auch hier von einem Strom durchflossen wird, der den Motorstrom repräsentiert. Die erste Widerstandsanordnung kann dann gleichzeitig zur Steuerung oder Regelung des Motors verwendet werden.

Die hier angegebenen Dimensionierung haben sich vorteilhaft bei einem 500W DC-Motor in einer Haushaltsküchenmaschine erwiesen. Die relative Größe der Kontaktflächen auf der Leiterplatte zu den SMD-Widerständen entsprach dabei im wesentlichen den relativen Abmessungen nach Fig. 5.

## Patentansprüche

1. Schaltungsanordnung zur Erkennung einer Übertemperatur aufgrund eines fließenden Stromes
mit einer thermischen Kopplung einer ersten Widerstandsanordnung (1, 2, 3, 4, 5, 13) und einer zweiten Widerstandsanordnung (9),
wobei der Widerstandswert der zweiten Widerstandsanordnung (9) das Verhalten eines Thermistors aufweist,
wobei zumindest die erste Widerstandsanordnung (1, 2, 3, 4, 5, 13) von dem auszuwertenden Strom durchflossen wird,
dadurch gekennzeichnet,
daß die erste Widerstandsanordnung (1, 2, 3, 4, 5, 13) aus zumindest einem SMD-Widerstand besteht, der mit einer Leiterbahn (302; 502; 603; 702; 802) thermisch verbunden ist, und daß die zweite Widerstandsanordnung (9) aus wenigstens einem SMD-Widerstand besteht, der mit derselben Leiterbahn thermisch verbunden ist.

2. Schaltungsanordnung nach Anspruch 1,
dadurch gekennzeichnet,
daß die erste Widerstandsanordnung (1, 2, 3, 4, 5, 13) aus fünf oder sechs SMD-Widerständen besteht, die elektrisch parallel geschaltet sind.

3. Schaltungsanordnung nach Anspruch 1 oder 2,
dadurch gekennzeichnet,
daß die zweite Widerstandsanordnung ein NTC-Verhalten aufweist.

4. Schaltungsanordnung nach einem der Ansprüche 1 bis 3,
dadurch gekennzeichent,
daß die zweite Widerstandsanordnung (9) in einem separaten Schaltkreis liegt, der nicht von dem auszuwertenden Strom durchflossen wird.

5. Schaltungsanordnung nach einem der Ansprüche 1 bis 4,
dadurch gekennzeichnet,
daß die erste Widerstandanordnung (1, 2, 3, 4, 5, 13) elektrisch mit der Leiterbahn verbunden ist und daß die zweite Widerstandsanordnung (9) elektrisch mit der Leiterbahn verbunden ist.

6. Schaltungsanordnung nach einem der Ansprüche 1 bis 4,
dadurch gekennzeichnet,
daß die erste Widerstandsanordnung (1, 2, 3, 4, 5, 13) elektrisch über einen ersten elektrischen Anschluß (6) mit einer ersten Leiterbahn (501; 801) verbunden ist, wobei zugleich eine thermische Kopplung dieser ersten Leiterbahn (501; 801) mit der ersten Widerstandsanordnung (1, 2, 3, 4, 5, 13) gegeben ist, und daß die erste Widerstandsanordnung (1, 2, 3, 4, 5, 13) elektrisch über einen zweiten elektrischen Anschluß (7) mit einer zweiten Leiterbahn (502; 802) verbunden ist, wobei zugleich eine thermische Kopplung dieser zweiten Leiterbahn (502; 802) mit der ersten Widerstandsanordnung (1, 2, 3, 4, 5, 13) gegeben ist, und daß die zweite Widerstandsanordnung (9) mit einer der beiden Leiterbahnen (502; 802) thermisch und elektrisch verbunden ist, und daß die zweite Widerstandsanordnung (9) mit der anderen der beiden Leiterbahnen (501; 801) thermisch verbunden ist, und daß die zweite Widerstandsanordnung (9) mit ihrem anderen elektrischen Anschluß (10) mit einer dritten Leiterbahn (503; 803) elektrisch verbunden ist.

7. Schaltungsanordnung nach Anspruch 2 und 6,
dadurch gekennzeichnet,
daß ein Teil der SMD-Widerstände (1, 2) der ersten Widerstandsanordnung (1, 2, 3, 4, 5, 13) mit einem größeren Teil eines Teiles (8), über den keine elektrische Kontaktierung möglich ist, auf einer ersten Leiterbahn (801) aufliegt und daß die übrigen SMD-Widerstände (3, 4, 5) der ersten Widerstandsanordnung (1, 2, 3, 4, 5, 13) mit einem größeren Teil des Teiles (8), über den keine elektrische Kontaktierung möglich ist, auf einer zweiten Leiterbahn (802) aufliegen.

8. Schaltungsanordnung nach Anspruch 7,
dadurch gekennzeichnet,
daß ein Teil (12) des/der SMD-Widerstände der zweiten Widerstandsanordnung (9), über den keine elektrische Kontaktierung möglich ist, zu etwa gleichen Teilen auf der ersten und der zweiten Leiterbahn (801, 802) aufliegt.

9. Schaltungsanordnung nach einem der Ansprüche 1 bis 4,
dadurch gekennzeichnet,
daß die zweite Widerstandsanordnung (9) elektrisch über einen ersten elektrischen Anschluß (10) mit einer ersten Leiterbahn (602) verbunden ist, wobei zugleich eine thermische Kopplung dieser ersten Leiterbahn (602) mit der zweiten Widerstandsanordnung (9) gegeben ist, und daß die zweite Widerstandsanordnung (9) elektrisch über einen zweiten elektrischen Anschluß (11) mit einer zweiten Leiterbahn (603) verbunden ist, wobei zugleich eine thermische Kopplung dieser zweiten Leiterbahn (603) mit der zweiten Widerstandsanordnung (9) gegeben ist, und daß die erste Widerstandsanordnung (1, 2, 3, 4, 5, 13) mit einer der beiden Leiterbahnn (603) thermisch und elektrisch verbunden ist, und daß die erste Widerstandsanordnung (1, 2, 3, 4, 5, 13) mit der anderen der beiden Leiterbahnen (602) thermisch verbunden, und daß die erste Widerstandsanordnung (1, 2, 3, 4, 5, 13) mit ihrem anderen elektrischen Anschluß (6) mit einer dritten Leiterbahn (601) elektrisch verbunden ist.

10. Verwendung einer Schaltungsanordnung nach einem der Ansprüche 1 bis 9 zur Übertemperaturabschaltung eines Elektromotors, insbesondere eines Elektromotors einer Haushaltsküchenmaschine.

## Claims

1. A circuit configuration for the detection of an excess temperature due to current flow,
in which a first resistor arrangement (1, 2, 3, 4, 5, 13) is thermally coupled to a second resistor arrangement (9),
in which the resistance value of said second resistor arrangement (9) has a thermistor action,
in which the current to be evaluated is flown through at least said first resistor arrangement (1, 2, 3, 4, 5, 13),
**characterized in that** said first resistor arrangement (1, 2, 3, 4, 5, 13) is comprised of at least one SMD resistor that is thermally coupled to a conductive track (302; 502; 603; 702; 802), and that said second resistor arrangement (9) is comprised of at least one SMD resistor thermally coupled to said same conductive track.

2. The circuit configuration as claimed in claim 1,
**characterized in that** said first resistor arrangement (1, 2, 3, 4, 5, 13) is comprised of five or six SMD resistors electrically connected in parallel.

3. The circuit configuration as claimed in claim 1 or 2,
**characterized in that** said second resistor arrangement has an NTC characteristic.

4. The circuit configuration as claimed in any one of the claims 1 to 3,
**characterized in that** said second resistor arrangement (9) is in a separate circuit through which the current to be evaluated is not flown.

5. The circuit configuration as claimed in any one of the claims 1 to 4,
**characterized in that** said first resistor arrangement (1, 2, 3, 4, 5, 13) is electrically connected to the conductive track and that said second resistor arrangement (9) is electrically connected to the conductive track.

6. The circuit configuration as claimed in any one of the claims 1 to 4,
**characterized in that** said first resistor arrangement (1, 2, 3, 4, 5, 13) is electrically connected to a first conductive track (501; 801) through a first termination (6), providing at the same time for thermal coupling of said first conductive track (501; 801) to said first resistor arrangement (1, 2, 3, 4, 5, 13), and that said first resistor arrangement (1, 2, 3, 4, 5, 13) is electrically connected through a second termination (7) to a second conductive track (502; 802), providing at the same time for thermal coupling of said second conductive track (502; 802) to said first resistor arrangement (1, 2, 3, 4, 5, 13), and that said second resistor arrangement (9) is both thermally and electrically connected to the one of said two conductive tracks (502; 802), and that said second resistor arrangement (9) is thermally coupled to the other one of said two conductive tracks (501; 801), and that said second resistor arrangement (9) has its other termination (10) electrically connected to a third conductive track (503; 803).

7. The circuit configuration as claimed in claims 2 and 6,
**characterized in that** part of the SMD resistors (1, 2) of said first resistor arrangement (1, 2, 3, 4, 5, 13) have a major part of a portion (8), through which no electrical bonding is possible, in engagement with a first conductive track (801), and that the remaining SMD resistors (3, 4, 5) of said first resistor arrangement (1, 2, 3, 4, 5, 13) have a major part of the portion (8), through which no electrical bonding is possible, in engagement with a second conductive track (802).

8. The circuit configuration as claimed in claim 7,
**characterized in that** a portion (12) of the SMD resistor(s) of said second resistor arrangement (9), through which no electrical bonding is possible, rests with about equal shares on said first and said second conductive track (801, 802).

9. The circuit configuration as claimed in any one of the claims 1 to 4,
**characterized in that** said second resistor arrangement (9) is electrically connected to a first conductive track (602) through a first termination (10), providing at the same time for thermal coupling of said first conductive track (602) to said second resistor arrangement (9), and that said second resistor arrangement (9) is electrically connected through a second termination (11) to a second conductive track (603), providing at the same time for thermal coupling of said second conductive track (603) to said second resistor arrangement (9), and that said first resistor arrangement (1, 2, 3, 4, 5, 13) is both thermally and electrically connected to the one (603) of said two conductive tracks, and that said first resistor arrangement (1, 2, 3, 4, 5, 13) is thermally coupled to the other one (602) of said two conductive tracks, and that said first resistor arrangement (1; 2, 3, 4, 5, 13) has its other termination (6) electrically connected to a third conductive track (601).

10. The use of a circuit configuration as claimed in any one of the claims 1 to 9 for cutting off an electric motor in the event of an excess temperature, in particular an electric motor of a food processor for domestic use.

## Revendications

1. Circuit pour détecter une élévation de température due au passage du courant, comportant un couplage thermique d'une première disposition de résistance (1, 2, 3, 4, 5, 13) et d'une seconde disposition de résistance (9)
la valeur de la résistance de la seconde disposition de résistance (9) présentant le comportement d'une thermistance,
dans lequel au moins la première disposition de résistance (1, 2, 3, 4, 5, 13) est parcourue par le courant à traiter,
caractérisé
par le fait que la première disposition de résistance (1, 2, 3, 4, 5, 13) est constituée d'au moins une résistance SMD/montée en surface, qui est thermiquement reliée à un ruban conducteur (302; 502; 603 ; 702; 802) et que la seconde disposition de résistance (9) est constituée d'au moins une résistance SMD thermiquement reliée au même ruban conducteur.

2. Circuit selon la revendication 1,
caractérisé
par le fait que la première disposition de résistance (1, 2, 3, 4, 5, 13) est constituée de cinq ou six résistances SMD montées électriquement en parallèle.

3. Circuit selon la revendication 1, ou 2
caractérisé
par le fait que la seconde disposition de résistance présente un comportement NTC/à coefficient de température négatif.

4. Circuit selon l'une des revendications 1, ou 3,
caractérisé
par le fait que la seconde disposition de résistance (9) est située dans un circuit distinct qui n'est pas parcouru par le courant à traiter.

5. Circuit selon l'une des revendications 1 à 4
caractérisé
par le fait que la première disposition de résistance (1, 2, 3, 4, 5, 13) est électriquement reliée au ruban conducteur et que la seconde disposition de résistance (9) est électriquement reliée au ruban conducteur.

6. Circuit selon l'une des revendications 1 à 4,
caractérisé
par le fait que la première disposition de résistance (1, 2, 3, 4, 5, 13) est électriquement reliée, par l'intermédiaire d'une première borne électrique (6), avec un premier ruban conducteur (501; 801), un couplage thermique de ce premier ruban conducteur (501; 801) avec la première disposition de résistance (1, 2, 3, 4, 5, 13) étant en même temps obtenu, et que la première disposition de résistance (1, 2, 3, 4, 5, 13) est électriquement reliée, par l'intermédiaire d'une seconde borne électrique (7), avec un second ruban conducteur (502; 802), un couplage thermique de ce second ruban conducteur (502; 802) avec la première disposition de résistance (1, 2, 3, 4, 5, 13) étant en même temps obtenu, et que la seconde disposition de résistance (9) est reliée thermiquement et électriquement avec l'un des deux rubans conducteurs (502; 802), et que la seconde disposition de résistance (9) est thermiquement reliée avec l'autre des deux rubans conducteurs (501; 801), et que la seconde disposition de résistance (9) est électriquement reliée, par son autre borne électrique (10) avec un troisième ruban conducteur (503; 803).

7. Circuit selon les revendications 2 et 6,
caractérisé
par le fait qu'une partie des résistances SMD (1, 2) de la première disposition de résistance (1, 2, 3, 4, 5, 13) porte, par une assez grande partie d'une partie (8), par l'intermédiaire de laquelle aucune mise en contact électrique n'est possible, sur un premier ruban conducteur (801), et que les autres résistances SMD (3, 4, 5) de la première disposition de résistance (1, 2, 3, 4, 5, 13) portent, par une assez grande partie de la partie (8), par l'intermédiaire de laquelle aucune mise en contact électrique n'est possible, sur un second ruban conducteur (802).

8. Circuit selon la revendication 7,
caractérisé
par le fait qu'une partie (12) de la ou des résistances SMD de la seconde disposition de résistance (9) par l'intermédiaire de laquelle aucune mise en contact n'est possible, porte, à parties à peu près égales, sur le premier et sur le second rubans conducteurs (801, 802).

9. Circuit selon l'une des revendications 1 à 4,
caractérisé
par le fait que la seconde disposition de résistance (9) est reliée, par l'intermédiaire d'une première borne électrique (10), avec un premier ruban conducteur (602), un couplage thermique de ce premier ruban conducteur (602) avec la seconde disposition de résistance (9) étant en même temps obtenu, et que la seconde disposition de résistance (9) est reliée électriquement, par l'intermédiaire d'une seconde borne électrique (11), à un second ruban conducteur (603), un couplage thermique de ce second ruban conducteur (603) avec la seconde disposition de résistance (9) étant en même temps obtenu, et que la première disposition de résistance (1, 2, 3, 4, 5, 13) est reliée, thermiquement et électriquement, avec l'un des deux rubans conducteurs (603), et que la première disposition de résistance (1, 2, 3, 4, 5, 13) est thermiquement reliée avec l'autre des deux rubans conducteurs (602), et que la première disposition de résistance (1, 2, 3, 4, 5, 13) est électriquement reliée, par son autre borne électrique (6), avec un troisième ruban conducteur (601).

10. Emploi d'un circuit selon l'une des revendications 1 à 9 pour mettre hors circuit, en cas d'élévation de température, un moteur électrique, en particulier un moteur électrique d'un robot ménager.
